# EUROPÄISCHE PATENTSCHRIFT

(11) **EP 2 245 685 B1**
(45) Veröffentlichungstag und Bekanntmachung des Hinweises auf die Patenterteilung: **01.02.2012**
(21) Anmeldenummer: 08872656.7
(22) Anmeldetag: 17.12.2008
(51) Int. Cl.: H01M 2/12

(54) **BATTERIE MIT VERSCHLUSSSTOPFEN**
BATTERY HAVING CLOSING PLUG
BATTERIE AVEC BOUCHON DE FERMETURE

(30) Priorität: 19.02.2008 DE 102008009864
(43) Veröffentlichungstag der Anmeldung: 03.11.2010
(73) Patentinhaber: Frötek- Vermögensverwaltung GmbH, 37520 Osterode (DE)
(72) Erfinder: KOCH, Thomas, 37154 Northeim (DE)
(74) Vertreter: Cohausz Hannig Borkowski Wißgott
(86) Internationale Anmeldenummer: PCT/EP2008/010769
(87) Internationale Veröffentlichungsnummer: WO 2009/103329

(56) Entgegenhaltungen:
- EP-A- 1 447 600
- US-A- 4 442 184
- US-B1- 6 491 176

## Beschreibung

Die Erfindung betrifft eine aufladbare Batterie insbesondere einen Bleiakkumulator mit im Batteriedeckel angeordneten, zu den Batteriezellen führenden Einfüllöffnungen, in denen Verschlussstopfen abdichtend einliegen.

In vielen Bleiakkumulatoren werden zum Verschließen der Einfüllöffnungen im Deckel Verschlussstopfen verschiedenster Bauart eingesetzt. Diese Verschlussstopfen werden mittels Verschraubung, Verrastung etc. fixiert und weisen meistens eine Dichtung zum Batteriedeckel auf. Bei Batterien mit festgelegtem Elektrolyt wird oft ein Ventil im Innenbereich der Verschlussstopfen integriert, damit kein Sauerstoff von außen in die Zellen gerät und die Zellen nicht vorzeitig austrocknen. Das zusätzliche Anordnen eines Ventils im Verschlussstopfen erfordert einen hohen Herstellungsaufwand.

Ferner ist es bekannt, im Batteriedeckel ein Überdruckventil anzuordnen (EP 1 447 600 A1), wobei das Überdruckventil eine Batterieelektrode umgeben kann, wie die US 4 442 184 zeigt.

Aufgabe der Erfindung ist es, eine Batterie der eingangs genannten Art so zu verbessern, dass bei geringem Herstellungsaufwand ein sicherer Druckausgleich erreicht wird.

Diese Aufgabe wird erfindungsgemäß dadurch gelöst, dass zwischen der Innenwand der Einfüllöffnung und der Außenwand des Verschlussstopfens mindestens eine elastische ringförmige Dichtlippe liegt, die durch einen Überdruck in der Batteriezelle verformbar ist, um den Überdruck nach außen abzubauen, und die Dichtlippe an der Außenwand des Verschlussstopfens befestigt ist.

Bei Einsatz insbesondere in herkömmlichen Blei-Säure-Batterien wird durch die Dichtlippe ein zusätzlicher Sicherheitsaspekt geschaffen, da kein zerstörerischer Überdruck mehr in der Batterie entstehen kann. Insbesondere bei Deckelausführungen mit seitlicher Zentralentgasung kann bei vermindertem Gasdurchsatz des seitlichen Flammschutzes infolge von z. B. Verschmutzung eine "Notentgasung" über mindestens einen der Stopfen erfolgen.

Bei Einsatz in Batterien mit festgelegtem Elektrolyt entsteht durch die Einbringung der Ventilfunktion mit dem Spritzvorgang ein erheblich geringerer Fertigungsaufwand. Zudem verringert sich die Anzahl der erforderlichen Einzelteile.

Eine weitere Vereinfachung wird dadurch erreicht, dass die Dichtlippe im 2-Komponenten-Spritzverfahren am Verschlussstopfen angeformt ist.

Weitere vorteilhafte Ausgestaltungen der Erfindung sind in den übrigen Unteransprüchen aufgeführt.

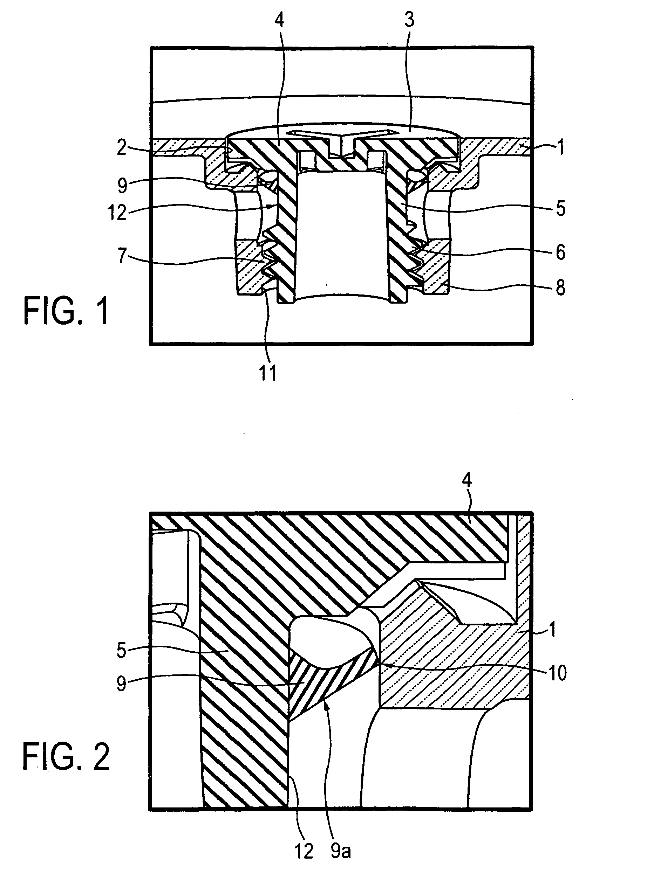

Ein Ausführungsbeispiel der Erfindung ist in der Zeichnung dargestellt und wird im Folgenden näher beschrieben. Es zeigen
- Fig. 1: einen senkrechten axialen Schnitt durch eine Batterieeinfüllöffnung mit Verschlussstopfen,
- Fig. 2: ein vergrößerter Ausschnitt aus Fig. 1 mit der Dichtlippe in abdichtender Stellung,

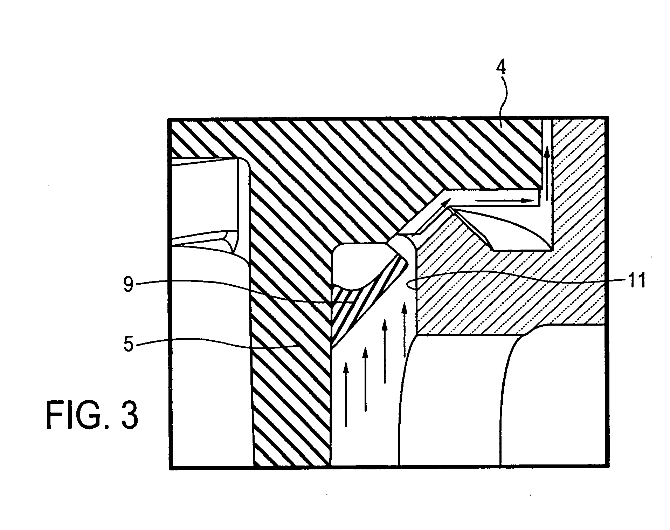

- Fig. 3: den vergrößerten Ausschnitt mit durch den Innendruck geöffneter Dichtlippe.

Eine aufladbare Batterie weist einen Blockkasten auf, der die Strom speichernden Teile aufnimmt und der an seiner Oberseite durch einen Batteriedeckel 1 verschlossen ist. Im Deckel 1 aus Kunststoff befinden sich Einfüllöffnungen 2, in denen Kunststoff-Verschlussstopfen 3 montiert sind.

Jeder Verschlussstopfen 3 weist eine obere waagerechte Verschlussplatte 4 auf, die bei montierten Stopfen 3 oberseitig nicht über die Oberfläche des Batteriedeckels 1 hinausragt. An der Unterseite der Patte 4 ist ein hülsenförmiges Teil 5 angeformt, dessen Achse senkrecht steht und das ein Außengewinde 6 besitzt, mit dem der Stopfen 3 in ein Innengewinde 7 im hülsenförmigen Bereich der Einfüllöffnung 2 einschraubbar ist.

Oberhalb des Außengewindes 6 ist an der Außenseite des hülsenförmigen Teils 5 eine vorzugsweise ringförmige elastische Dichtlippe 9 koaxial befestigt, die im nicht belasteten Zustand mit ihrem ringförmigen Außenrand 10 an der Innenwand 11 der Einfüllöffnung 2 insbesondere an der Innenseite des hülsenförmigen Bereichs 8 abdichtend anliegt. Hierbei bildet die Unterseite der Dichtlippe 9 eine Schräge 9a, gegen die der Innendruck anliegt.

Somit wird an den Verschlussstopfen anstelle einer Dichtung außenseitig eine speziell geformte insbesondere ringförmige Dichtlippe 9 eingesetzt, die gleichzeitig die Funktion eines Ventils übernimmt. Diese ist entweder montiert, oder vorzugsweise direkt im 2-Komponenten-Verfahren angespritzt. Die Ventilfunktion wird dann nach Montage des Stopfens in die entsprechende Deckelöffnung mittels Vorspannung durch die Wandung der Deckelöffnung erzielt. Erhöht sich nun der Innendruck des abgedichteten Gefäßes um einen bestimmten Betrag, so kann das Druck erzeugende Medium durch kurzzeitige Verformung der Dichtlippe diese passieren, bis der Druck nicht mehr ausreicht, um die Verformung aufrecht zu erhalten.

Um eine sichere Ventilfunktion zu gewährleisten weist das Material eine größere Elastizität auf als das Material des Verschlussstopfens 3 und/oder des Batteriedeckels 1.

## Patentansprüche

1. Aufladbare Batterie insbesondere Bleiakkumulator mit im Batteriedeckel (1) angeordneten, zu den Batteriezellen führenden Einfüllöffnungen (2), in denen Verschlussstopfen (3) abdichtend einliegen, **dadurch gekennzeichnet, dass** zwischen der Innenwand (11) der Einfüllöffnung (2) und der Außenwand (12) des Verschlussstopfens (3) mindestens eine elastische ringförmige Dichtlippe (9) liegt, die durch einen Überdruck in der Batteriezelle verformbar ist, um den Überdruck abzubauen, und die Dichtlippe (9) an der Außenwand (12) des Verschlussstopfens (3) befestigt ist.

2. Batterie nach Anspruch 1,**dadurch gekennzeichne**t, dass die Dichtlippe (9) im 2-Komponenten-Spritzverfahren am Verschlussstopfen (3) angeformt ist.

3. Batterie nach Anspruch 1 oder 2, **dadurch gekennzeichnet, dass** die Unterseite der Dichtlippe (9) eine Schräge (9a) bildet, gegen die der Zelleninnendruck anliegt.

4. Batterie nach einem der vorherigen Ansprüche, **dadurch gekennzeichnet, dass** das Material der Dichtlippe (9) eine größere Elastizität aufweist als das Material des Verschlussstopfens (3) und/oder des Batteriedeckels (1).

## Claims

1. Rechargeable battery, in particular a lead accumulator, with filler holes (2) which are arranged in the battery cover (1) and lead to the battery cells and in which stoppers (3) are inserted in a sealed fashion, **characterized in that** at least one annular elastic sealing lip (9) is located between the inner wall (11) of the filler hole (2) and the outer wall (12) of the stopper (3) and can be deformed by excess pressure inside the battery cell to relieve the excess pressure, and the sealing lip (9) is attached to the outer wall (12) of the stopper (3).

2. Battery according to Claim 1, **characterized in that** the sealing lip (9) is formed on the stopper (3) in a 2-component injection moulding process.

3. Battery according to Claim 1 or Claim 2, **characterized in that** the underside of the sealing lip (9) has an oblique face (9a) on which the cell's internal pressure bears.

4. Battery according to any one of the preceding claims, **characterized in that** the material of the sealing lip (9) has greater elasticity than the material of the stopper (3) and/or battery cover (1).

## Revendications

1. Batterie rechargeable, en particulier accumulateur au plomb, comprenant des ouvertures de remplissage (2) disposées dans le couvercle de batterie (1) et menant aux cellules de batterie, ouvertures dans lesquelles s'insèrent de façon étanche des bouchons de fermeture (3), **caractérisée en ce qu'**au moins une lèvre d'étanchéité annulaire élastique (9) se situe entre la paroi intérieure (11) de l'ouverture de remplisage (2) et la paroi extérieure (12) du bouchon de fermeture (3), laquelle lèvre est déformable par une surpression dans la cellule de batterie pour réduire la surpression, et la lèvre d'étanchéité (9) est fixée sur la paroi extérieure (12) du bouchon de fermeture (3).

2. Batterie suivant la revendication 1, **caractérisée en ce que** la lèvre d'étanchéité (9) est conformée sur le bouchon de fermeture (3) dans un procédé d'injection à deux composants.

3. Batterie suivant l'une des revendications 1 et 2, **caractérisée en ce que** le côté inférieur de la lèvre d'étanchéité (9) forme une pente (9a), contre laquelle s'applique la pression interne de la cellule.

4. Batterie suivant l'une des revendications précédentes, **caractérisée en ce que** le matériau de la lèvre d'étanchéité (9) présente une élasticité supérieure à celle du matériau du bouchon de fermeture (3) et/ou du couvercle de batterie (1).
